# EUROPEAN PATENT APPLICATION

(11) **EP 4 745 391 A1**
(43) Date of publication of application: **20.05.2026**
(21) Application number: 25211806.2
(22) Date of filing: 28.10.2025
(51) Int. Cl.: F02M 21/02, F02D 19/02

(54) **GAS FUEL FLOW DEVICE AND ENGINE**

(30) Priority: 14.11.2024 JP 2024199001
(71) Applicant: Yanmar Holdings Co., Ltd., Osaka-shi, Osaka (JP)
(72) Inventor: MATSURA, Yoshimitsu, Osaka (JP); IWAKURA, Masanao, Osaka (JP)
(74) Representative: Novagraaf International SA

(57) **Abstract**

[Problem] To provide a technique capable of detecting a state of gas fuel that flows in an inner pipe and preventing leakage of the gas fuel to the outside of an outer pipe.

[Solution] A gas fuel flow device is a gas fuel flow device of an engine that combusts a gas fuel comprising: a double pipe including an inner pipe through which the gas fuel flows, and an outer pipe that is placed with a predetermined gap between the outer pipe and an outer peripheral surface of the inner pipe. The double pipe is provided with a detection portion that detects a state of the gas fuel. The detection portion includes a state detection sensor that is arranged to extend from an inside of the inner pipe to an outside of the outer pipe, and a cover portion that covers a protruding portion of the state detection sensor that protrudes from the outer pipe.

## Description

### TECHNICAL FIELD

The present invention relates to a gas fuel flow device and an engine.

### BACKGROUND ART

Patent Document 1 discloses a gas fuel transport pipe for an engine of a ship that uses natural gas as fuel. The gas fuel transport pipe is surrounded by a duct in a double pipe shape as a safety measure against gas leakage from the gas fuel transport pipe.

### PRIOR ART DOCUMENT

### PATENT DOCUMENT

Patent Document 1: Japanese Unexamined Patent Publication No. 2019-90768

### SUMMARY OF INVENTION

### TECHNICAL PROBLEM

In order to realize engine control suitable for combustion of a gas fuel (gaseous fuel), it is desirable to directly detect the state of the gas fuel with a state detection sensor and perform control based on the detected state of the gas fuel. However, for example, when the state detection sensor is arranged to extend from the inside of an inner pipe to the outside of an outer pipe (duct) in order to detect the state of the gas fuel flowing in the inner pipe (gas fuel transport pipe), that is, when a portion of the state detection sensor protrudes from the outer pipe, the gas fuel may leak to the outside of the outer pipe.

The present invention has been made to solve the above problem, and an object of the present invention is to provide a technique capable of detecting a state of a gas fuel flowing in an inner pipe and preventing the gas fuel from leaking to the outside of an outer pipe.

### SOLUTION TO PROBLEM

A gas fuel flow device according to one aspect of the present invention is a gas fuel flow device of an engine that combusts a gas fuel comprising: a double pipe including an inner pipe through which the gas fuel flows, and an outer pipe that is placed with a predetermined gap between the outer pipe and an outer peripheral surface of the inner pipe, wherein the double pipe is provided with a detection portion that detects a state of the gas fuel the detection portion includes a state detection sensor that is arranged to extend from an inside of the inner pipe to an outside of the outer pipe, and a cover portion that covers a protruding portion of the state detection sensor that protrudes from the outer pipe.

An engine according to another aspect of the present invention includes the above-described gas fuel flow device.

### ADVANTAGEOUS EFFECTS OF INVENTION

With the above configuration, the state of the gas fuel flowing in the inner pipe can be detected, and leakage of the gas fuel to the outside of the outer pipe can be prevented.

### BRIEF DESCRIPTION OF DRAWINGS

FIG. 1 is a side view illustrating a schematic configuration of an engine according to an embodiment of the present invention.
FIG. 2 is a plan view illustrating a schematic configuration of the engine.
FIG. 3 is a schematic view schematically illustrating a schematic configuration of the engine.
FIG. 4 is a horizontal cross-sectional view of a detection portion provided in a gas fuel flow device of the engine.
FIG. 5 is a back view illustrating a configuration of the detection portion.
FIG. 6 is an enlarged vertical cross-sectional view illustrating the vicinity of a state detection sensor provided in the detection portion.

### DESCRIPTION OF EMBODIMENTS

An embodiment of the present invention will be described below with reference to the drawings.

### [1. Schematic configuration of engine]

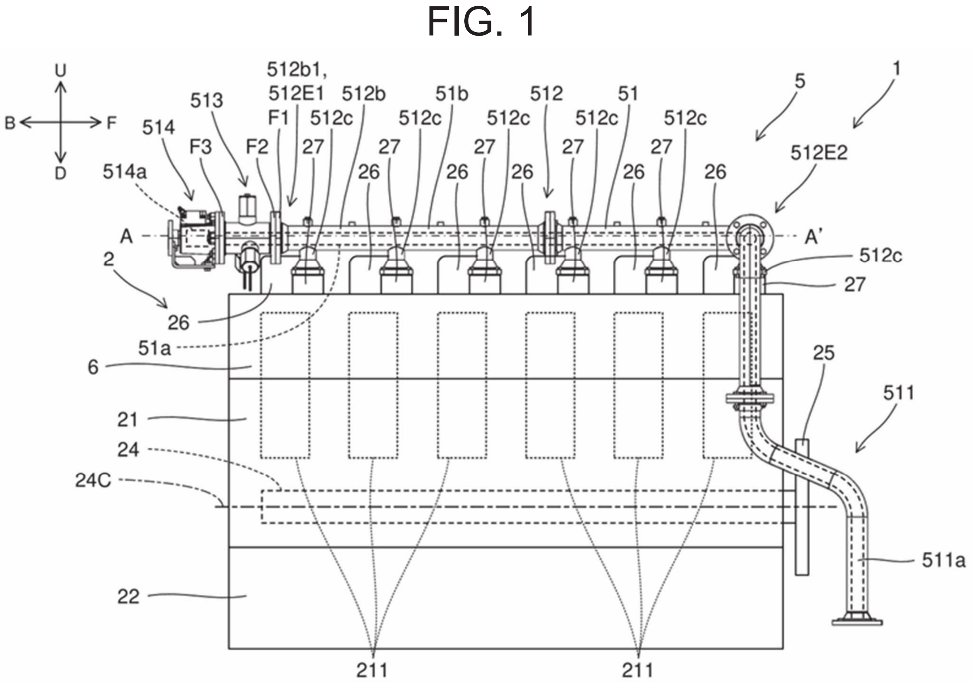

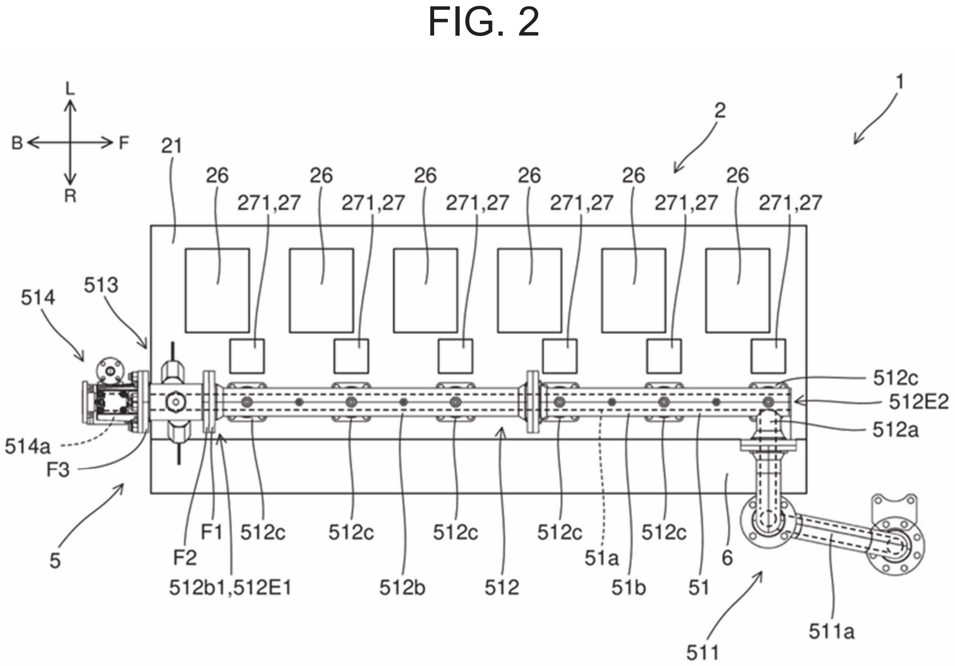

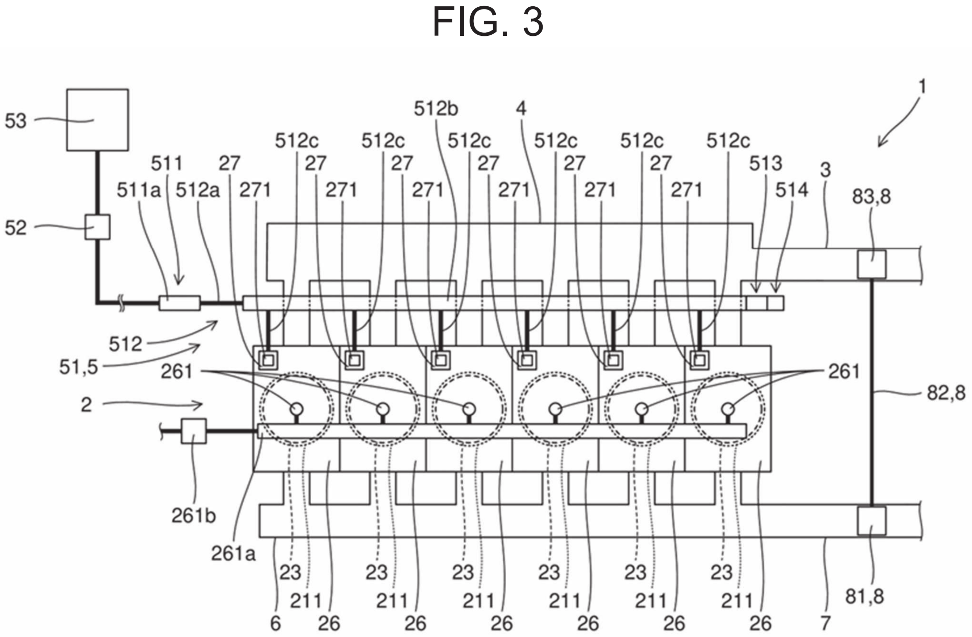

FIG. 1 and FIG. 2 are a side view and a plan view illustrating a schematic configuration of an engine 1 according to an embodiment of the present invention. FIG. 3 is a schematic view schematically illustrating a schematic configuration of the engine 1. For the sake of convenience, FIG. 2 illustrates only a part of an engine body 2, a gas fuel flow device 5, and an exhaust manifold 6, which will be described below. The positional relationship of respective portions in FIG. 3 is merely for describing the schematic configuration of the engine 1, and is not intended to limit the positional relationship of the respective portions in the present embodiment.

The engine 1 is mounted on, for example, a ship. However, the engine 1 may be mounted on an agricultural machine such as a tractor, a construction machine such as a hydraulic excavator, or the like, in addition to a ship. The engine 1 may be installed on the ground and used for power generation.

The engine 1 injects a gas fuel into air sucked from the outside, that is, intake air to generate an air-fuel mixture, compresses the air-fuel mixture, injects a liquid fuel into the high-temperature air-fuel mixture, and combusts the gas fuel (in the air-fuel mixture) to obtain power (also referred to as rotational power). More specifically, the gas fuel is ignited and combusted by self-ignition of the liquid fuel injected into the high-temperature air-fuel mixture. In the present embodiment, the gas fuel is hydrogen, but is not limited thereto, and may be, for example, ammonia, natural gas, or the like. The liquid fuel is light oil, but is not limited thereto, and may be, for example, heavy oil, biofuel, or the like. That is, the engine 1 of the present embodiment is a mixed combustion engine of a gas fuel (hydrogen) and a liquid fuel (light oil). However, the configuration of the engine 1 is not limited to the above, and the engine 1 may be, for example, a dedicated combustion engine of gas fuel.

The engine 1 includes an engine body 2, an intake pipe 3, an intake manifold 4, a gas fuel flow device 5, an exhaust manifold 6, an exhaust pipe 7, and a turbocharger 8. The engine body 2 includes a cylinder block 21, an oil pan 22, a piston 23, a crankshaft 24, a fly wheel 25, a cylinder head 26, and a gas fuel supply portion 27.

Here, directions in this embodiment are defined as follows. In particular, as illustrated in FIG. 1 and FIG. 2, a direction in which the cylinder block 21 and the oil pan 22 are arranged is defined as an up-down direction, a direction in which the oil pan 22 is located with respect to the cylinder block 21 is defined as "down", and a direction opposite to "down" is defined as "up". A direction in which a center line 24C of the crankshaft 24 extends (also referred to as an axial direction of the crankshaft 24) is defined as a front-back direction, a direction in which the fly wheel 25 is located with respect to the cylinder block 21 is defined as "front", and a direction opposite to "front" is defined as "back". Further, a direction perpendicular to the up-down direction and the front-back direction is defined as a left-right direction, a direction in which the exhaust manifold 6 is located with respect to the cylinder block 21 is defined as "right", and a direction opposite to "right" is defined as "left". In the drawings, the front side, the back side, the left side, the right side, the up side, and the down side are denoted by the symbols "F", "B", "R", "L", "U", and "D", respectively, when necessary. These directions are names used merely for the description and are not intended to limit actual positional relationships and directions.

The cylinder block 21 is composed of a rectangular parallelepiped metal member extending in the front-back direction and the up-down direction, and is located such that the longitudinal direction thereof extends in the front-back direction. A lower portion of the cylinder block 21 is connected to the oil pan 22 that stores lubricant oil used for lubrication of respective portions of the engine body 2.

The cylinder block 21 is provided with a cylindrical cylinder 211 extending in the up-down direction. The cylinder 211 extends downward from an upper surface portion of the cylinder block 21, and six cylinders 211 are provided side by side in the front-back direction. That is, the engine 1 includes a plurality of (six in the present embodiment) cylinders 211. The number of the cylinders 211 is not limited to six, and may be one, or a plurality other than six.

The piston 23 is accommodated in each cylinder 211 so as to be slidable (that is, reciprocable) in the up-down direction (in the cylinder 211). Each piston 23 is composed of a cylindrical metal member. Each piston 23 is connected to the crankshaft 24 via a connecting rod (not illustrated).

The crankshaft 24 is supported at a lower portion of the cylinder block 21 so as to be rotatable with respect to the cylinder block 21. The crankshaft 24 converts a reciprocating motion of each piston 23 into a rotational motion. A front end of the crankshaft 24 is connected to a propulsion device (not illustrated) mounted on a ship via a fly wheel 25. The fly wheel 25 is provided to absorb rotational fluctuation of the engine 1 and prevent torsional vibration and the like. The above-described propulsion device is configured so that a propeller (not illustrated) can be attached to the propulsion device and generates a propulsive force of the ship.

The cylinder head 26 is composed of a substantially rectangular parallelepiped metal member and is connected to an upper portion of the cylinder block 21. The cylinder head 26 is provided corresponding to each cylinder 211 of the cylinder block 21. That is, in the present embodiment, the number of cylinder heads 26 is six. Each cylinder head 26 is placed above the cylinder 211. In the present embodiment, in each cylinder 211, a space surrounded by the inner peripheral surface of the cylinder 211, the top surface of the piston 23, and the bottom surface of the cylinder head 26 is also referred to as a combustion chamber.

Each cylinder head 26 is provided with an intake port (not illustrated) for supplying intake air to the combustion chamber and an exhaust port (not illustrated) for discharging exhaust gas from the combustion chamber. An injector 261 is attached to each cylinder head 26. That is, in the present embodiment, the number of injectors 261 is six. Each injector 261 injects the liquid fuel that is stored at a high pressure in a common-rail 261a into the corresponding combustion chamber at a predetermined timing. The liquid fuel is pressurized and fed to the common-rail 261a by a supply pump 261b. The supply pump 261b is driven by the power of the engine 1 transmitted from the crankshaft 24 via a belt member (not illustrated) or the like.

The gas fuel supply portion 27 is provided corresponding to each cylinder 211, similarly to the cylinder head 26. That is, in the present embodiment, the number of the gas fuel supply portions 27 is six. Each gas fuel supply portion 27 is arranged near the cylinder head 26 provided corresponding to the corresponding cylinder 211 (for example, on the right side of the cylinder head 26). Each gas fuel supply portion 27 is provided with a supply valve 271 that is capable of supplying (injecting) the gas fuel to the intake air to be supplied to the combustion chamber. That is, the engine 1 includes a plurality of supply valves 271 that supply the gas fuel to each cylinder 211.

Each piston 23 reciprocates in the cylinder 211 by a force generated by combustion of the gas fuel that is supplied to each combustion chamber. Thus, the crankshaft 24 rotates, and power can be extracted from the engine 1 to the outside.

The intake pipe 3 sucks air from outside and supplies the air to the intake manifold 4. The intake manifold 4 supplies the air (intake air) supplied from the intake pipe 3 to each combustion chamber (each cylinder 211) via the intake port of each cylinder head 26.

The gas fuel flow device 5 causes the gas fuel to flow through each supply valve 271. More specifically, the gas fuel flow device 5 includes a double pipe 51. The double pipe 51 has an inner pipe 51a and an outer pipe 51b. The inner pipe 51a and the outer pipe 51b are each composed of a tubular metal member. The inner pipe 51a is located on a radially inner side of the double pipe 51 with respect to the outer pipe 51b. The radially inner side of the double pipe 51 means a direction approaching the central axis of the double pipe 51 in a direction orthogonal to the central axis of the double pipe 51 (also referred to as a radial direction of the double pipe 51). A radially outer side of the double pipe 51 means a direction away from the central axis of the double pipe 51 in the radial direction of the double pipe 51.

The gas fuel flows through the inner pipe 51a toward each supply valve 271. That is, the inner pipe 51a is a pipe through which the gas fuel flows. The configurations of the inner pipe 51a and the outer pipe 51b will be described in detail below.

The double pipe 51 is provided with a connection pipe portion 511, a distribution portion 512, a detection portion 513, and a ventilation flow passage switching portion 514. The connection pipe portion 511 includes a connection pipe 511a. One end portion of the connection pipe 511a is connected to, via a valve unit 52, a gas fuel tank 53 that stores the gas fuel. The valve unit 52 includes various control valves. The various control valves include an on-off valve that can switch on and off the communication between the connection pipe 511a and the gas fuel tank 53, a bleed valve that is used when the gas fuel is discharged from at least one of the double pipe 51 and the gas fuel tank 53, and the like. The other end portion of the connection pipe 511a is connected to the distribution portion 512.

The distribution portion 512 includes an inflow pipe 512a, a common pipe 512b, and a plurality of branch pipes 512c. The inflow pipe 512a extends in the left-right direction. The inflow pipe 512a has a right end portion connected to the connection pipe 511a and a left end portion connected to the common pipe 512b.

The common pipe 512b extends in the front-back direction (the axial direction of the crankshaft 24). That is, the common pipe 512b is arranged to extend in one direction (the front-back direction in the present embodiment). The direction in which the common pipe 512b extends is not limited to the front-back direction, and may be, for example, the left-right direction or the up-down direction. The direction in which the common pipe 512b extends may be an oblique direction that is inclined with respect to at least one of the front-back direction, the left-right direction, and the up-down direction.

The common pipe 512b is placed above the exhaust manifold 6. More specifically, the exhaust manifold 6 is located on the right side of the cylinder block 21 to extend in the front-back direction and the left-right direction. The common pipe 512b is placed at a position shifted leftward from the center of the exhaust manifold 6 in the left-right direction in a plan view (when the engine 1 is viewed from above). The exhaust manifold 6 collectively discharges the exhaust gas discharged from each combustion chamber via the exhaust port of the cylinder head 26 to the exhaust pipe 7.

The exhaust pipe 7 discharges the exhaust gas collected by the exhaust manifold 6 to the outside of the ship. The exhaust pipe 7 is provided with a turbine 81. The turbine 81 is connected to the compressor 83 via a connecting shaft 82. The compressor 83 is provided in the intake pipe 3. The turbine 81, the connecting shaft 82, and the compressor 83 constitute a turbocharger 8. The turbine 81 rotates when the exhaust gas flowing through the exhaust pipe 7 hits the turbine 81. The compressor 83 is driven by the rotational power of the turbine 81 transmitted via the connecting shaft 82, and compresses intake air. Therefore, the amount of intake air supplied to each combustion chamber (each cylinder 211) can be increased by the turbocharger 8. The engine 1 may have a configuration in which the turbocharger 8 is removed. The engine 1 may be configured to include a turbo charging mechanism other than the turbocharger 8 instead of the turbocharger 8.

The plurality of branch pipes 512c are connected to a lower portion of the common pipe 512b. The branch pipe 512c is provided corresponding to each gas fuel supply portion 27 of the engine body 2. That is, in the present embodiment, the number of branch pipes 512c is six. Each branch pipe 512c extends in the up-down direction. The upper end portion of each branch pipe 512c is connected to the common pipe 512b, and the lower end portion of each branch pipe 512c is connected to the gas fuel supply portion 27. The plurality of branch pipes 512c allow the common pipe 512b and the respective supply valves 271 to communicate with each other. That is, the common pipe 512b communicates with the respective supply valves 271.

Therefore, the gas fuel that is stored in the gas fuel tank 53 flows into each branch pipe 512c via the valve unit 52, the connection pipe 511a, and the common pipe 512b. The gas fuel that has flowed into each branch pipe 512c is supplied to the combustion chamber by the supply valve 271 of the gas fuel supply portion 27 corresponding to this branch pipe 512c. That is, the distribution portion 512 distributes the gas fuel to the respective supply valves 271.

A first flange F1 is provided on an end portion 512b1 on the back side of the common pipe 512b. A second flange F2 corresponding to the first flange F1 is provided at a front end portion of the detection portion 513. The back end portion of the detection portion 513 is provided with a third flange F3 used for connection to the ventilation flow passage switching portion 514.

The first flange F1, the second flange F2, and the third flange F3 are each composed of a disk-shaped metal member extending in a vertical direction (up-down direction and left-right direction) perpendicular to the lateral direction. However, the shape of each of the first flange F1, the second flange F2, and the third flange F3 is not limited to a circular shape, and may be, for example, an elliptical shape, a square shape, a rectangular shape, or a polygonal shape other than a square shape and a rectangular shape.

The first flange F1 and the second flange F2 are fixed to each other by a fixing member such as a bolt, so that the common pipe 512b and the detection portion 513 are connected to each other. That is, the detection portion 513 is connected to an end portion 512b1 of the common pipe 512b on one side (the back side in the present embodiment) in the one direction. The end portion 512b1 on the back side of the common pipe 512b constitutes one end portion 512E1 of the distribution portion 512. That is, the detection portion 513 is connected to the one end portion 512E1 of the distribution portion 512. The front end portion of the common pipe 512b constitutes the other end portion 512E2 of the distribution portion 512.

For example, a case where the detection portion 513 is attached to the one end portion 512E1 of the distribution portion 512 is compared with a case where the detection portion 513 is attached to a middle portion (not illustrated) between the one end portion 512E1 and the other end portion 512E2 of the distribution portion 512. In a case where the detection portion 513 is attached to the middle portion, the middle portion needs to be processed. However, in a case where the detection portion 513 is attached to the one end portion 512E1, the one end portion 512E1 does not needs to be processed, and thus the attachment of the detection portion 513 to the one end portion 512E1 is less time-consuming. The above-described processing includes, for example, cutting, attachment of a connecting member (not illustrated), and the like. The less time-consuming (easy) attachment of the detection portion 513 is suitable for a configuration in which the detection portion 513 is attached later. Therefore, the following configuration is desirable from the viewpoint of easily attaching (attaching later) the detection portion 513 in a configuration in which the double pipe 51 is provided with the distribution portion 512 that distributes the gas fuel to the plurality of supply valves 271 that supply the gas fuel to the plurality of cylinders 211 of the engine 1. That is, as in the present embodiment, the detection portion 513 is preferably connected to the one end portion 512E1 of the distribution portion 512.

The following configuration is desirable from the viewpoint of reliably realizing a configuration in which the distribution portion 512 includes the common pipe 512b that communicates with the respective supply valves 271, the common pipe 512b extends in one direction (in the present embodiment, the front-back direction), and the detection portion 513 is easily attached (attached later). That is, as in the present embodiment, the detection portion 513 is preferably connected to the end portion 512b1 on one side (the back side in the present embodiment) in the one direction of the common pipe 512b.

When the above-described fixing member that fixes the first flange F1 and the second flange F2 is removed, the connection between the common pipe 512b and the detection portion 513 is released. That is, the detection portion 513 is detachably provided in the double pipe 51.

From the viewpoint of realizing a configuration suitable for attaching the detection portion 513 later or maintenance (for example, inspection, replacement, and the like) of the detection portion 513, the detection portion 513 is preferably detachably provided in the double pipe 51 as in the present embodiment.

The ventilation flow passage switching portion 514 has a front end portion connected to the detection portion 513 (specifically, a back end portion of the detection portion 513) and a back end portion connected to a blower (not illustrated) mounted on the ship. The blower sends air outside the ship into the double pipe 51 via the ventilation flow passage switching portion 514. The blower is, for example, a blower, a fan, or the like. The ventilation flow passage switching portion 514 includes a flow passage (not illustrated) through which the air sent from the blower flows and a switching valve 514a that can switch on and off the communication with the inside of the inner pipe 51a in the ventilation flow passage switching portion 514. The function of the switching valve 514a will be described below.

The engine 1 further includes a control device (not illustrated) that controls the engine 1. The control device may be mounted on the ship, and may be provided, for example, near the engine body 2 or away from the engine body 2. The configuration of the detection portion 513 will be described below.

### [2. Configuration of detection portion]

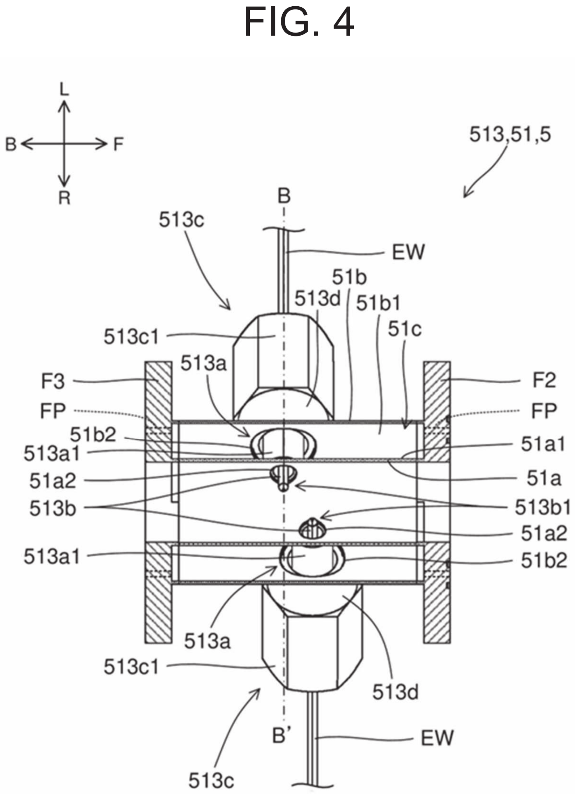

FIG. 4 is a horizontal cross-sectional view of the detection portion 513 taken along line A-A ' in FIG. 1 in the horizontal direction. In the detection portion 513, the inner pipe 51a and the outer pipe 51b are connected to each other via the second flange F2 located at a front end portion of the detection portion 513 and the third flange F3 located at a back end portion of the detection portion 513. As described above, the inner pipe 51a is located on the radially inner side of the double pipe 51 with respect to the outer pipe 51b. More specifically, a predetermined gap 51c is formed between an outer peripheral surface 51a1 of the inner pipe 51a and an inner peripheral surface 51b1 of the outer pipe 51b. That is, the outer pipe 51b is spaced apart from the outer peripheral surface 51a1 of the inner pipe 51a by the predetermined gap 51c.

The predetermined gap 51c communicates with the blower and the outside of the ship via a communication path FP formed in each of the second flange F2 and the third flange F3. More specifically, the predetermined gap 51c communicates with the blower via the communication path FP of the third flange F3, the ventilation flow passage switching portion 514 (see FIG. 1 and the like), and the like. The predetermined gap 51c communicates with the outside of the ship via the communication path FP of the second flange F2, a portion between the inner pipe 51a and the outer pipe 51b in the common pipe 512b (see FIG. 1 and the like), a portion between the inner pipe 51a and the outer pipe 51b in the connection pipe 511a (see FIG. 1 and the like), and the like. Each communication path FP is formed to extend in the front-back direction.

When the blower is driven, the air outside the ship is sent to the predetermined gap 51c via the ventilation flow passage switching portion 514, the communication path FP of the third flange F3, and the like. The air flowing into the predetermined gap 51c flows through the predetermined gap 51c from the back toward the front. The air that has flowed through the predetermined gap 51c is discharged to the outside of the ship via the communication path FP of the second flange F2, the portion between the inner pipe 51a and the outer pipe 51b in the common pipe 512b, the portion between the inner pipe 51a and the outer pipe 51b in the connection pipe 511a, and the like. Therefore, for example, even when a portion of the joining portion between the inner pipe 51a and the second flange F2 is opened and the gas fuel flowing in the inner pipe 51a flows out from the opening, the gas fuel that has flowed out is discharged to the outside of the ship while ensuring safety by the air that flows through the predetermined gap 51c. That is, the air flowing through the predetermined gap 51c is used for ventilation of the predetermined gap 51c. The ventilation of the predetermined gap 51c is always performed at least while the gas fuel in the engine 1 is being used (the gas fuel is flowing in the gas fuel flow device 5).

When the switching valve 514a (see FIG. 1 and the like) of the ventilation flow passage switching portion 514 is driven and the above-described flow passage in the ventilation flow passage switching portion 514 and the inside of the inner pipe 51a (of the ventilation flow passage switching portion 514) communicate with each other, a portion of the air sent from the blower flows into the inner pipe 51a. Thus, the inside of the inner pipe 51a can be ventilated (also referred to as purging of the inner pipe 51a). The ventilation of the inside of the inner pipe 51a is performed at an appropriate timing. The timing of ventilating the inside of the inner pipe 51a (that is, driving the switching valve 514a) is determined by the above-described control device.

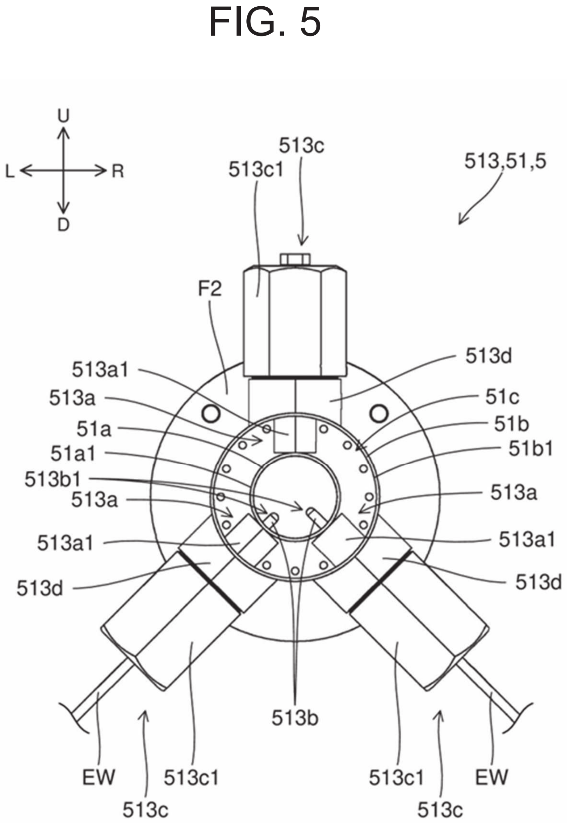

The detection portion 513 includes an attachment portion 513a, a state detection sensor 513b, and a cover portion 513c. More details are as follows. FIG. 5 is a back view illustrating a configuration of the detection portion 513. For convenience, the third flange F3 is not illustrated in FIG. 5.

The attachment portions 513a are provided on the lower left side, the lower right side, and the upper side of the inner pipe 51a. That is, in the present embodiment, the number of the attachment portions 513a is three. More specifically, the three attachment portions 513a are arranged to be shifted from each other in the circumferential direction of the double pipe 51 and shifted from each other in the front-back direction (see also FIG. 4). To be specific, one of the three attachment portions 513a (the attachment portion side 513a on the lower left side in FIG. 5) is located so that the upper side of this attachment portion extends in a first inclined direction that is inclined rightward with respect to the up-down direction. One of the remaining two attachment portions (the attachment portion 513a on the lower right side in FIG. 5) is located slightly in front of the attachment portion 513a extending in the first inclined direction (see FIG. 4) and the upper side of this attachment portion extends in a second inclined direction that is inclined leftward with respect to the up-down direction. The other (of the remaining two attachment portions) (the attachment portion 513a on the upper side in FIG. 5) is located to extend in the up-down direction between, in the front-back direction, the attachment portion 513a extending in the first inclined direction and the attachment portion 513a extending in the second inclined direction.

The number of the attachment portions 513a is not limited to three and, for example, may be one, or a plurality other than three. The arrangement configuration of the attachment portion 513a is not limited to the above. For example, the three attachment portions 513a may be arranged side by side in the circumferential direction of the double pipe 51 or may be arranged side by side in the front-back direction.

The state detection sensor 513b is attached to two of the three attachment portions 513a (the attachment portions 513a on the lower left side and the lower right side in FIG. 5). The remaining one attachment portion (the attachment portion 513a on the upper side in FIG. 5) is excluded as a spare from the attachment targets of the state detection sensor 513b. Therefore, in the present embodiment, the number of the state detection sensors 513b is two. However, the present invention is not limited to the above-described configuration, and, for example, the state detection sensor 513b may be attached to one or all of the three attachment portions 513a. That is, the state detection sensor 513b may be attached to at least one of the three attachment portions 513a. That is, the number of state detection sensors 513b may be one or a plurality other than two. The (spare) attachment portion 513a excluded from the attachment target of the state detection sensor 513b is also provided with the cover portion 513c or the like described below.

Each attachment portion 513a includes an attachment member 513a1 composed of a cylindrical metal member. However, the configuration of the attachment member 513a1 is not limited to the above, and may be, for example, a rectangular cylindrical shape. Each attachment member 513a1 is joined to the outer peripheral surface 51a1 of the inner pipe 51a by welding or the like. That is, each attachment portion 513a is connected to the outer peripheral surface 51a1 of the inner pipe 51a.

One state detection sensor 513b (the state detection sensor 513b on the left side in FIG. 5) is composed of a pressure sensor that detects the pressure of the gas fuel flowing in the inner pipe 51a. The other state detection sensor 513b (the state detection sensor 513b on the right side in FIG. 5) is composed of a temperature sensor that detects the temperature of the gas fuel flowing in the inner pipe 51a. The pressure and the temperature of the gas fuel are included in the state of the gas fuel. That is, the detection portion 513 detects the state (the pressure and the temperature in the present embodiment) of the gas fuel by each state detection sensor 513b.

The configuration of the two state detection sensors 513b is not limited to the above. For example, both of the two state detection sensors 513b may be composed of a pressure sensor, or both of the two state detection sensors 513b may be composed of a temperature sensor. At least one of the two state detection sensors 513b may be composed of a sensor (for example, a flow rate sensor) other than the pressure sensor and the temperature sensor. That is, the state of the gas fuel may include, for example, a flow rate.

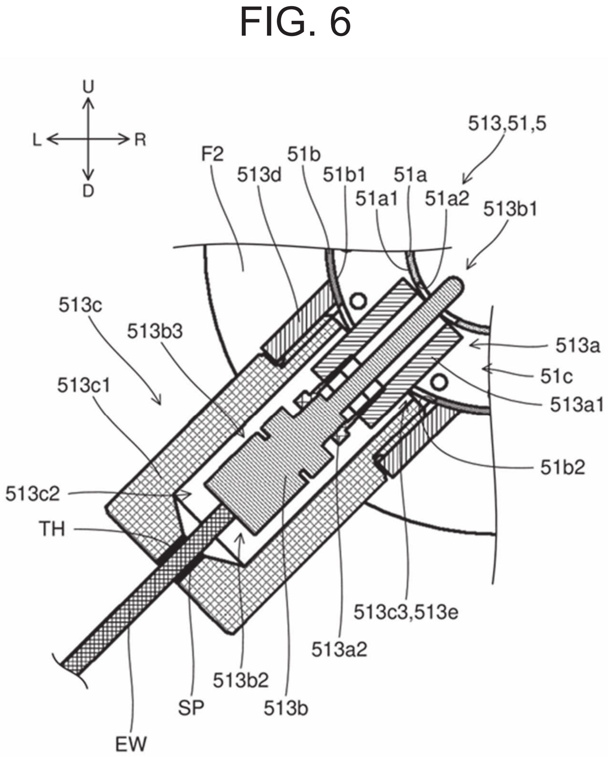

The one state detection sensor 513b is attached to the attachment member 513a1 included in the attachment portion 513a extending in the first inclined direction (a direction in which the upper side is inclined rightward with respect to the up-down direction). The other state detection sensor 513b is attached to the attachment member 513a1 included in the attachment portion 513a extending in the second inclined direction (a direction in which the upper side is inclined leftward with respect to the up-down direction). That is, the state detection sensor 513b is attached to the attachment portion 513a. That is, the state detection sensor 513b is attached to the inner pipe 51a via the attachment portion 513a. More details are as follows. FIG. 6 is a vertical cross-sectional view in which the detection portion 513 is cut in the up-down direction at a position where a line B-B ' in FIG. 4 passes and the vicinity of the one state detection sensor 513b is enlarged. The attachment configuration of the state detection sensor 513b (and the gas fuel leakage prevention structure) will be described below based on the one state detection sensor 513b as an example.

A female screw is formed on at least a portion of an inner peripheral surface of the attachment member 513al, and a male screw is formed on at least a portion of an outer peripheral surface of the state detection sensor 513b. The inner pipe 51a is provided with a first extraction port 51a2 that passes through the inner pipe 51a in the radial direction of the double pipe 51 (the first inclined direction in FIG. 6) (see also FIG. 4). The outer pipe 51b is provided with a second extraction port 51b2 that passes through the outer pipe 51b in the radial direction of the double pipe 51 (the first inclined direction in FIG. 6) (see also FIG. 4). That is, the inner pipe 51a includes the first extraction port 51a2 that opens toward the radially outer side of the double pipe 51, and the outer pipe 51b includes the second extraction port 51b2 that opens toward the radially outer side of the double pipe 51. In particular, the second extraction port 51b2 is provided at a position overlapping with the first extraction port 51a2 when viewed from the radially outer side of the double pipe 51.

When the state detection sensor 513b is attached to the attachment member 513a1, the state detection sensor 513b is inserted from the radially outer side (the lower left side in FIG. 6) of the double pipe 51 into the first extraction port 51a2 of the inner pipe 51a and the inner peripheral surface of the attachment member 513a1, and is screwed into the attachment member 513a1. The above-described screwing means that a member having a male screw (the state detection sensor 513b in the present embodiment) and a member having a female screw (the attachment member 513a1 in the present embodiment) are engaged with each other and joined to each other. Thus, the state detection sensor 513b is attached (fixed) to the attachment member 513a1 with the state detection sensor 513b passing through the first extraction port 51a2.

The attachment member 513a1 passes through the second extraction port 51b2 of the outer pipe 51b and is connected to the outer peripheral surface 51a1 of the inner pipe 51a. Therefore, the state detection sensor 513b is arranged to pass through the first extraction port 51a2 and the second extraction port 51b2. That is, the state detection sensor 513b is arranged to extend from the inside of the inner pipe 51a to the outside of the outer pipe 51b. In particular, the tip end portion 513b1 of the state detection sensor 513b is located inside the inner pipe 51a, and the base end portion 513b2 of the state detection sensor 513b is located outside the outer pipe 51b.

An adapter 513a2 is provided between the state detection sensor 513b and the attachment member 513a1. The adapter 513a2 is provided to cause the outer diameter of the screw portion of the state detection sensor 513b to correspond to the inner diameter of the attachment member 513a1. However, the adapter 513a2 may be removed from the attachment portion 513a.

In the present embodiment, a portion of the state detection sensor 513b that protrudes from the outer pipe 51b is also referred to as a protruding portion 513b3. The cover portion 513c is located around the protruding portion 513b3. The cover portion 513c includes a cover member 513c1.

The cover member 513c1 is composed of a cylindrical metal member extending in the radial direction of the double pipe 51 (the first inclined direction in FIG. 6). Specifically, the cover member 513c1 is configured to close the radially outer side (the lower left side in FIG. 6) of the double pipe 51. In the present embodiment, the internal space of the cover member side 513c1 is also referred to as an inner side 513c2 of the cover portion 513c. Therefore, an opening portion 513c3 that communicates with the inner side 513c2 of the cover portion 513c is provided in a portion of the cover member 513c1 on the radially inner side (the upper right side in FIG. 6) of the double pipe 51. A male screw is formed on the outer peripheral surface of the cover member 513c1 on the radially inner side of the double pipe 51.

The cover member 513c1 is provided with a through hole TH through which the electric wire EW passes. In the present embodiment, the through hole TH is formed to pass through the cover member 513c1 in the radial direction of the double pipe 51 on the radially outer side of the double pipe 51. The configuration of the through hole TH is not limited to the above. For example, the through hole TH may be formed to pass through the cover member 513c1 in a direction orthogonal to the central axis of the cover member 513c1.

The electric wire EW is connected to the state detection sensor 513b and the above-described control device. The information related to the state of the gas fuel detected by the state detection sensor 513b is transmitted to the control device via the electric wire EW. The control device controls the engine 1 on the basis of the transmitted information. The through hole TH is provided with a seal member SP that fills a gap between the outer peripheral surface of the electric wire EW passing through the through hole TH and the through hole TH.

The cover member 513c1 is detachably attached to the outer pipe 51b via the fastening member 513d. The fastening member 513d is composed of a cylindrical metal member extending in the radial direction of the double pipe 51 (the first inclined direction in FIG. 6). However, the configuration of the fastening member 513d is not limited to the above, and may be, for example, a rectangular cylindrical shape.

A portion of the fastening member 513d on the radially inner side of the double pipe 51 (the upper right side in FIG. 6) is connected to the outer peripheral surface of the outer pipe 51b, to be specific, the periphery of the second extraction port 51b2. Therefore, when viewed from the radially outer side of the double pipe 51, the second extraction port 51b2 is located on the radially inner side of the fastening member 513d with respect to the inner peripheral edge of the fastening member 513d. The radially inner side of the fastening member 513d means a direction approaching the central axis of the fastening member 513d in a direction orthogonal to the central axis of the fastening member 513d. A female screw is formed on the inner peripheral surface of the fastening member 513d.

When the cover member 513c1 is attached to the outer pipe 51b via the fastening member 513d, the cover member 513c1 located on the radially outer side of the double pipe 51 is moved toward the radially inner side with respect to the fastening member 513d. At this time, the opening portion 513c3 of the cover member 513c1 is moved corresponding to (aligned with) the protruding portion 513b3 and the attachment member 513a1. Then, the cover member 513c1 is inserted into the inner peripheral edge of the fastening member 513d and screwed to the fastening member 513d. Then, the cover member 513c1 can be attached to the outer pipe 51b via the fastening member 513d while covering the protruding portion 513b3 and the portion of the attachment member 513a1 on the radially outer side of the double pipe 51. That is, the cover portion 513c covers the protruding portion 513b3 of the state detection sensor 513b that protrudes from the outer pipe 51b.

With the above configuration, a portion of the state detection sensor 513b capable of detecting the state (in the present embodiment, the pressure and the temperature) of the gas fuel can be placed in the flow of the gas fuel flowing in the inner pipe 51a. Another portion of the state detection sensor 513b can be placed outside the outer pipe 51b. Therefore, even in a configuration in which the detection portion 513 is provided in the double pipe 51 having the inner pipe 51a and the outer pipe 51b arranged with a predetermined gap 51c from the inner pipe 51a, the state of the gas fuel that flows in the inner pipe 51a can be directly detected and output. Thus, the engine 1 can be controlled based on the directly detected state of the gas fuel, and the control of the engine 1 suitable for the combustion of the gas fuel can be realized.

For example, it is assumed that the gas fuel that flows in the inner pipe 51a passes between the state detection sensor 513b and the inner pipe 51a and between the state detection sensor 513b and the outer pipe 51b and flows out toward the protruding portion 513b3 of the state detection sensor 513b located outside the outer pipe 51b. In this assumption, since the protruding portion 513b3 is covered with the cover portion 513c, the gas fuel that has flowed out can be retained in the cover portion 513c. Therefore, leakage of the gas fuel to the outside of the outer pipe 51b can be prevented. Thus, the state of the gas fuel flowing in the inner pipe 51a can be detected, and leakage of the gas fuel to the outside of the outer pipe 51b can be prevented.

The following configuration is desirable from the viewpoint of reliably realizing the arrangement of the state detection sensor 513b extending from the inside of the inner pipe 51a to the outside of the outer pipe 51b in the configuration in which the inner pipe 51a includes the first extraction port 51a2, the outer pipe 51b includes the second extraction port 51b2, and the first extraction port 51a2 and the second extraction port 51b2 are open on the radially outer side of the double pipe 51. That is, as in the present embodiment, it is desirable that the state detection sensor 513b is arranged to pass through the first extraction port 51a2 and the second extraction port 51b2.

When the cover member 513c1 is attached to the outer pipe 51b (via the fastening member side 513d), the opening portion 513c3 of the cover member 513c1 is connected to the second extraction port 51b2 of the outer pipe 51b. As described above, the second extraction port 51b2 passes through the double pipe 51 in the radial direction. Therefore, the second extraction port 51b2 communicates with the predetermined gap 51c (located between the inner pipe 51a and the outer pipe 51b). Therefore, the opening portion 513c3 and the second extraction port 51b2 cause the inner side 513c2 of the cover portion 513c (in the present embodiment, an internal space of the cover member 513c1) to communicate with the predetermined gaps 51c. That is, the inner side 513c2 of the cover portion 513c communicates with the predetermined gap 51c.

More specifically, the attachment of the cover member 513c1 to the outer pipe 51b is performed by moving the opening portion 513c3 corresponding to the attachment member 513a1 as described above. Therefore, the attachment member 513a1 is located to pass through the opening portion 513c3. As described above, the attachment member 513a1 is located to pass through the second extraction port 51b2. In the present embodiment, among the opening portion 513c3 and the second extraction port 51b2, a space other than the space through which the attachment member 513a1 passes (a gap between the opening portion 513c3 and the outer peripheral surface of the attachment member 513a1 and a gap between the second extraction port 51b2 and the outer peripheral surface of the attachment member 513a1) is also referred to as a communication portion 513e. Therefore, the detection portion 513 includes the communication portion 513e, and the communication portion 513e causes the inner side 513c2 of the cover portion 513c and the predetermined gap 51c to communicate with each other and is located around the attachment portion 513a.

It is desirable to cause the gas fuel retained in the cover portion 513c to flow through the predetermined gap 51c and to be discharged to the outside (the outside of the ship in the present embodiment) by the air flowing through the predetermined gap 51c while ensuring safety. From this viewpoint, the inner side 513c2 of the cover portion 513c preferably communicates with the predetermined gap 51c as in the present embodiment.

From the viewpoint of attaching the state detection sensor 513b to the inner pipe 51a in a configuration in which the detection portion 513 includes the attachment portion 513a to which the state detection sensor 513b is attached, it is preferable that, as in the present embodiment, the attachment portion 513a is preferably connected to the outer peripheral surface 51a1 of the inner pipe 51a. Even in a configuration in which the detection portion 513 includes the attachment portion 513a, it is desirable to reliably realize a configuration in which the inner side 513c2 of the cover portion 513c and the predetermined gap 51c communicate with each other. From this viewpoint, it is desirable that, as in the present embodiment, the detection portion 513 includes, in addition to the attachment portion 513a, the communication portion 513e that causes the inner side 513c2 of the cover portion 513c and the predetermined gap 51c to communicate with each other, and the communication portion 513e is placed around the attachment portion 513a.

The protruding portion 513b3 of the state detection sensor 513b is located on the radially outer side of the double pipe 51 with respect to the communication portion 513e, and the predetermined gap 51c is located on the radially inner side of the double pipe 51 with respect to the inner side of the communication portion 513e. That is, the predetermined gap 51c, the protruding portion 513b3, and the communication portion 513e are arranged in the order of the protruding portion 513b3, the communication portion 513e, and the predetermined gap 51c from the radially outer side toward the radially inner side of the double pipe 51.

For example, in the case of the gas fuel that has a smaller (lighter) specific weight than air as in the present embodiment, when the protruding portion 513b3, the communication portion 513e, and the predetermined gap 51c are located in this order from the lower side to the upper side, the gas fuel retained in the cover portion 513c easily flows to the predetermined gap 51c. On the other hand, in the case of the gas fuel that has a larger (heavier) specific weight than air, when the protruding portion 513b3, the communication portion 513e, and the predetermined gap 51c are located in this order from the upper side to the lower side, the gas fuel retained in the cover portion 513c easily flows to the predetermined gap 51c. Therefore, the following configuration is desirable from the viewpoint of realizing, in accordance with the specific weight of the gas fuel, a configuration in which the gas fuel retained in the cover portion 513c easily flows toward the predetermined gap 51c. That is, as in the present embodiment, the predetermined gap 51c, the protruding portion 513b3, and the communication portion 513e are preferably arranged in the order of the protruding portion 513b3, the communication portion 513e, and the predetermined gap 51c from the radially outer side toward the radially inner side of the double pipe 51.

### [3. Supplement]

In the present embodiment, for convenience, the description of the attachment configuration of the other state detection sensor 513b and the leakage prevention structure of the gas fuel has been omitted, but the attachment configuration of the other state detection sensor 513b is substantially the same as the attachment configuration of the one state detection sensor 513b. That is, to be specific, the attachment configuration of the other state detection sensor 513b is the same as the attachment configuration of the one state detection sensor 513b except that the attachment direction (arrangement direction) of the state detection sensor 513b is different and the adapter 513a2 is removed. The leakage prevention structure of the gas fuel in the other state detection sensor 513b is the same as the leakage prevention structure of the gas fuel in the one state detection sensor 513b.

In the present embodiment, a case where the back side is referred to as "one side in one direction" and the front side is referred to as "the other side in one direction" has been described, but the present invention is not limited thereto. For example, the front side may be referred to as "one side in one direction", and the back side may be referred to as "the other side in one direction". That is, the front and back may be reversed.

### [4. Supplementary Notes]

The gas fuel flow device 5 and the engine 1 described in the present embodiment can also be expressed as a gas fuel flow device and an engine described in the following supplementary notes.

A gas fuel flow device according to Supplementary Note 1 is a gas fuel flow device of an engine that combusts a gas fuel comprising:
a double pipe including
   an inner pipe through which the gas fuel flows, and
   an outer pipe that is placed with a predetermined gap between the outer pipe and an outer peripheral surface of the inner pipe,
wherein the double pipe is provided with a detection portion that detects a state of the gas fuel
the detection portion includes
   a state detection sensor that is arranged to extend from an inside of the inner pipe to an outside of the outer pipe, and
   a cover portion that covers a protruding portion of the state detection sensor that protrudes from the outer pipe.

A gas fuel flow device according to Supplementary Note 2 is the gas fuel flow device according to Supplementary Note 1, wherein
the inner pipe includes a first extraction port that opens toward a radially outer side of the double pipe,
the outer pipe includes a second extraction port that opens toward a radially outer side of the double pipe, and
the state detection sensor is provided through the first extraction port and the second extraction port.

A gas fuel flow device according to Supplementary Note 3 is the gas fuel flow device according to Supplementary Note 1 or 2, wherein
an inner side of the cover portion communicates with the predetermined gap.

A gas fuel flow device according to Supplementary Note 4 is the gas fuel flow device according to Supplementary Note 3, wherein
the detection portion includes
   an attachment portion to which the state detection sensor is attached, and
   a communication portion that allows the inner side and the predetermined gap to communicate with each other,
the attachment portion is connected to the outer peripheral surface, and
the communication portion is located around the attachment portion.

A gas fuel flow device according to Supplementary Note 5 is the gas fuel flow device according to Supplementary Note 4, wherein
the protruding portion, the communication portion, and the predetermined gap are arranged in this order from a radially outer side toward a radially inner side of the double pipe.

A gas fuel flow device according to Supplementary Note 6 is the gas fuel flow device according to any one of Supplementary Notes 1 to 5, wherein
the detection portion is detachably provided in the double pipe.

A gas fuel flow device according to Supplementary Note 7 is the gas fuel flow device according to any one of Supplementary Notes 1 to 6, wherein
the engine includes
   a plurality of cylinders, and
   a plurality of supply valves that supply the gas fuel to the respective cylinders,
the double pipe is provided with a distribution portion that distributes the gas fuel to the respective supply valves, and
the detection portion is connected to one end portion of the distribution portion.

A gas fuel flow device according to Supplementary Note 8 is the gas fuel flow device according to Supplementary Note 7, wherein
the distribution portion includes a common pipe that communicates with the respective supply valves,
the common pipe is arranged to extend in one direction, and
the detection portion is connected to an end portion of the common pipe on one side in the one direction.

An engine according to Supplementary Note 9 is an engine comprising the gas fuel flow device according to any one of Supplementary Notes 1 to 8.

Although the embodiment of the present invention has been described above, the scope of the present invention is not limited thereto, and the present invention can be implemented by expanding or changing it without departing from the gist of the invention.

### INDUSTRIAL APPLICABILITY

The present invention is applicable to, for example, an engine used in a ship, a work machine (a construction machine, an agricultural machine, or the like), or a power generation device.

### REFERENCE SIGNS LIST

1 engine
5 gas fuel flow device
51 double pipe
51a inner pipe
51a1 outer peripheral surface (outer peripheral surface of the inner pipe)
51a2 first extraction port
51b outer pipe
51b2 second extraction port
51c predetermined gap
211 cylinder
512 distribution portion
512b common pipe
512b1 end portion (end portion of the common pipe)
513 detection portion
271 supply valve
513a attachment portion
513b state detection sensor
513b3 protruding portion
513c cover portion
513c2 inner side (inner side of the cover portion)
513e communication portion
512E1 one end portion (one end portion of the distribution portion)

## Claims

1. A gas fuel flow device of an engine that combusts a gas fuel comprising:
a double pipe including
an inner pipe through which the gas fuel flows, and
an outer pipe that is placed with a predetermined gap between the outer pipe and an outer peripheral surface of the inner pipe,
wherein the double pipe is provided with a detection portion that detects a state of the gas fuel
the detection portion includes
a state detection sensor that is arranged to extend from an inside of the inner pipe to an outside of the outer pipe, and
a cover portion that covers a protruding portion of the state detection sensor that protrudes from the outer pipe.

2. The gas fuel flow device according to claim 1, wherein
the inner pipe includes a first extraction port that opens toward a radially outer side of the double pipe,
the outer pipe includes a second extraction port that opens toward a radially outer side of the double pipe, and
the state detection sensor is provided through the first extraction port and the second extraction port.

3. The gas fuel flow device according to claim 1, wherein an inner side of the cover portion communicates with the predetermined gap.

4. The gas fuel flow device according to claim 3, wherein
the detection portion includes
an attachment portion to which the state detection sensor is attached, and
a communication portion that allows the inner side and the predetermined gap to communicate with each other,
the attachment portion is connected to the outer peripheral surface, and
the communication portion is located around the attachment portion.

5. The gas fuel flow device according to claim 4, wherein the protruding portion, the communication portion, and the predetermined gap are arranged in this order from a radially outer side toward a radially inner side of the double pipe.

6. The gas fuel flow device according to claim 1, wherein the detection portion is detachably provided in the double pipe.

7. The gas fuel flow device according to claim 1, wherein
the engine includes
a plurality of cylinders, and
a plurality of supply valves that supply the gas fuel to the respective cylinders,
the double pipe is provided with a distribution portion that distributes the gas fuel to the respective supply valves, and
the detection portion is connected to one end portion of the distribution portion.

8. The gas fuel flow device according to claim 7, wherein
the distribution portion includes a common pipe that communicates with the respective supply valves,
the common pipe is arranged to extend in one direction, and
the detection portion is connected to an end portion of the common pipe on one side in the one direction.

9. An engine comprising the gas fuel flow device according to any one of claims 1 to 8.
